# EUROPEAN PATENT APPLICATION

(11) **EP 4 016 821 A1**
(43) Date of publication of application: **22.06.2022**
(21) Application number: 20214224.6
(22) Date of filing: 15.12.2020
(51) Int. Cl.: H02M 1/088

(54) **DEVICE AND METHOD FOR ADAPTING SWITCHING OPERATION OF AT LEAST ONE POWER SWITCH IN A POWER INVERTER**

(71) Applicant: ConverterTec Deutschland GmbH, 47906 Kempen (DE)
(72) Inventor: Georgiev, Stefan, 8400 Karnobat (BG); Bones, Norbert, 41334 Nettetal (DE); Wenzel, Karsten, 47803 Krefeld (DE)
(74) Representative: Cohausz & Florack

(57) **Abstract**

The invention relates to a device for adapting the switching operation of the power switches of at least one phase module in a power inverter. Furthermore, the invention relates to a power inverter assembly stack comprising the inventive device as well as to renewable power generating unit, in particular wind turbine, with a plurality of power inverter assembly stacks connected in parallel with the power generator and/or with an electrical grid. Finally, the invention relates to a method for operating the power switches of at least one phase module in a power inverter. The object of the present invention to allow the replacement of power inverter assembly stacks even if the original equipment is not available without the danger of unbalanced load distribution over the in parallel connected power inverter assembly stacks is solved in that, the inventive device comprises:
- at least one input signal unit configured to receive at least one switching control signal of the power inverter control unit for the power switches of at least one phase module of a power inverter,
- at least one adapting unit configured to adapt the received switching control signal of the power inverter control unit by delaying and
- at least one output signal unit configured to provide the adapted control signal of the power inverter control unit to the power switches of at least one phase module of the power inverter.

## Description

The invention relates to a device for adapting the switching operation of power switches of at least one phase module in a power inverter. Furthermore, the invention relates to a power inverter assembly stack comprising the inventive device as well as to renewable power generating unit, in particular wind turbine, with a plurality of power inverter assembly stacks connected in parallel with the power generator and/or with an electrical grid. Finally, the invention relates to a method for operating the power switches of at least one phase module in a power inverter.

For many years in renewable power generating units like wind turbines or solar power generating units power inverters have been successfully used to generate and feed electrical power into a grid. Wind turbines for example have reached power levels of several megawatts, for example up to 12 MW. Wind turbines comprise a power generator, for example a synchronous generator or a doubly fed induction generator, to transform the mechanical energy of a rotor to electrical energy and using power inverters to convert the electrical energy to the voltage and frequency of the grid. As the total power load of semiconductor power switches is limited, such high power levels are realized by using power inverters connected in parallel. The power inverters are usually arranged in power inverter assembly stacks for example with a 2-level topology. In a 2-level topology the power switches of a phase module of a power inverter connect as half-bridge circuit the DC-link with one phase of the three phase machine or grid connection. Thus, a power inverter comprises usually three phase modules connected with a three phase rotor of a doubly fed induction generator or a three phase stator winding of a synchronous generator for example. However, other topologies are possible, for example the 3-level topology. The parallel connected power inverters are arranged in switch cabinets, whereas the use of power inverter assembly stacks has become widespread. In a power inverter assembly stack the main components of a power inverter interacting with each other are arranged in one compact arrangement. A typical power inverter assembly stack includes a grid and/or machine connection unit, three phase modules connecting an included DC-link with the three phases of a machine connection unit and/or grid connection unit. However, depending on the specific application a power inverter assembly stack may only include at least one phase module of an inverter including drive units for all power switches of the at least one phase module. The advantage of using power inverter assembly stacks is that by connection several power inverter assembly stacks in parallel high power generating units can be provided. Additionally, in case of a defect or a failure of a component of the power inverter assembly stack the complete power stack assembly can be replaced in very short time. This reduces the down time of a wind turbine for example to a minimum.

However, when replacing power inverter assembly stacks in the field several problems arise. At first when the replacement of power inverter assembly stacks is done the control unit of the power generating unit controlling the in parallel connected power inverters is usually not replaced. As a replacement takes place usually a few or many years after installing of the power generating unit the original switches due to the development of power switches may be no longer available. Thus, due to the parallel connection of the power inverter the replacement of power inverter assembly stacks, however, using different power switches in different power inverter assembly stacks may cause unbalanced current load after replacement which may cause a shorter lifetime of one of the power inverter assembly stacks carrying the main load or also of the complete arrangement or power inverter after a replacement. It has been recognized that a replacement of a power inverter assembly stack with a power inverter assembly stack comprising different switching times of the power switches could lead to unbalanced loads of the installed power inverter assembly stacks. Thus, in some cases one of the power inverter assembly stack may fail due to overloading.

The problem of the switching time of direct parallel connecting several IGBT modules is known from the article "Decentralized Active Gate Control for Current Balancing of Parallel Connected IGBT Modules" from Y. Lobsiger et al, ETH Zürich. It has been identified that several factors may cause dynamic and static unbalanced currents of parallel connected IGBTs. Already differences in the interconnection of the switches to bus bar and heatsinks, parameter variations of the semiconductors, as well as tolerances and delay times in the gate drive units may cause unwanted system failures. For a parallel connection of IGBTs the authors of the aforementioned article found out that the delay times and the gate currents, defined by the gate drive units supply voltage, the gate resistors and the gate wiring inductance impact the current sharing of in parallel connected IGBTs substantially. As solution for this problem a centralized main control unit considering different gate drive unit properties is regarded as to be unfeasible in case of subsequent modifications of the power switches. Therefore, the authors propose to provide decentralized active gate control units dedicated to each gate drive unit of each IGBT. The decentralized active gate controls measures the current of the dedicated IGBT and provides the measured current as a reference signal to the neighboring gate drive unit.

However, this solution is provided on IGBT module level and may cause higher expenses for the complex decentralized active gate controls for each power switch. Furthermore, the solution on IGBT module level cannot be adapted to the problem, which arises in the field when replacing a power inverter assembly stack. Usually identical power inverter assembly stacks may be not available at the time of replacement. Therefore, the differences of the power inverter assembly stacks are not caused only by the IGBTs itself, but rather additionally by different interconnections of the IGBTs, completely different gate drive units and etc.. Providing a decentralized active gate control for each IGBT in a replaced power inverter assembly stack, which uses measured IGBT currents as reference signal for other IGBT power switches is in particular not of help, as the reference signal cannot accelerate slower power switches of power inverter assembly units of a different type. As providing of additional signals to other power inverter assembly stacks connected in parallel would cause the need of an modification of the control unit, this solution for directly connecting IGBTs in parallel seems not to be feasible for the problems arising in the replacement of power inverter assembly stacks.

Therefore, it is an object of the present invention to allow the replacement of power inverter assembly stacks even if the original equipment is not available without the danger of unbalanced load distribution over the in parallel connected power inverter assembly stacks.

According to a first teaching of the present invention the above-mentioned object is solved by a device for adapting the switching operation of the power switches of at least one phase module in a power inverter, wherein the device comprises:
- at least one input signal unit configured to receive at least one switching control signal of the power inverter control unit for the power switches of at least one phase module of a power inverter,
- at least one adapting unit configured to adapt the received switching control signal of the power inverter control unit by delaying and
- at least one output signal unit configured to provide the adapted control signal of the power inverter control unit to the power switches of at least one phase module of the power inverter.

The above described device allows to use the existing power inverter control unit of an existing arrangement of parallel connected power inverter assembly stacks and to adapt only the control signals of the fastest power switches of a replaced power inverter assembly stack to avoid unbalanced current loads of the in parallel connected power assembly stacks after replacement. The device allows to delay the switching operation of the fastest power switches of a power inverter assembly stack independently whether the replaced power inverter assembly stack comprises the fastest power switches or the remaining one. Thus, the device can also be used to delay the switching operation of remaining power switches in an arrangement of several in parallel connected power inverter assembly stacks with at least one replaced power inverter assembly stack. As a result the switching operation of in parallel connected phase modules, for example of the IGBT-modules of the phase modules can be adapted to avoid unbalanced load situations in an easy and most flexible way. Of course, it is also feasible to use other power switch modules like IGCTs or other semiconductors instead of IGBTs in the phase modules to provide power switches.

In the case the at least one input signal unit of the device, the at least one adapting unit and the at least one output unit of the device are configured to receive control signals of all phase modules of a power inverter, adapting the control signals of all power switches of all phase modules by delaying and providing the delayed switching control signals to all phase modules of the power inverter only one device is necessary for each power inverter in a power inverter assembly stack. In this way the switching behavior of all phase modules of for example the replaced power inverter assembly stack can be adapted to the switching behavior of the other in parallel connected power inverter assembly stacks.

According to a next embodiment of the present invention the at least one adapting unit of the device is configured to further adapt the switching control signal of the inverter control unit. With further adapting is meant to change the switching control signal not only by delaying the signal but for example by changing the shape of the signal, the voltage level etc. in order to adapt the switching control signal of the power inverter control unit to the power switches of the replaced power inverter assembly stack.

According to another embodiment of the invention, the adapting unit is configured to delay the switching control signal of the inverter control unit for the power switches of all phase modules of at least one power inverter connected to the grid connection unit and/or of at least one power inverter connected to the machine connection unit with the same delay time. Using the same delay time for example for all phase modules of a power inverter connected to the grid or machine connection unit leads to a very simple adaption of the switching control signals. When replacing the power inverter assembly stack, only one delay time parameter must be determined and set, which makes the system robust and easy to handle. Preferably, the same delay time may be used for all power switches in a power inverter assembly stack connected to the grid connection unit and the machine connection unit. On the other hand, using separate delay times for every single module makes the adaption of the switching control signals more accurate. If a very high accuracy of the delay times is necessary to keep the currents between the power inverter assembly stacks in balance, separate delay time parameters can be determined and set for the power switches of every single phase.

Switching control of IGBT power switches is commonly done by using the rising edge signal and the falling edge signal of a switching control signal. For example, with the rising edge signal the switch is turned on and with the falling edge signal the switch is turned off. A more flexible adaptation of the power switching control signals is therefore achieved by a further embodiment of the inventive device in that, the at least one adapting unit is configured to delay the rising edge and the falling edge of the switching control signal of the power inverter control unit separately, in particular the rising edge and the falling edge signal of each of a top and a bottom power switch of a phase module separately. Preferably, the same delay time of the rising edge and of the falling edge of the switching control signal of the power inverter control unit are used for all phase modules of at least one power inverter connected to the grid connection unit and/or of at least one power inverter connected to the machine connection unit for simplification. Delaying of the rising edge of the switching control signal may delay "turning-on" of the accordant power switch, whereas delaying of the falling edge will left the power switch longer in the turn-on state. The delay times, which are used in the adapting unit may be empirically determined and static. For example, if the combination of power inverter assembly stack which is to be replaced is already known, delay times may be predetermined in the view of specific equipment combinations in the field.

Moreover, according to a further embodiment of the device the switching operation of the power switches can be further improved in that the input signal unit is configured to receive auxiliary control signals, wherein auxiliary control signals may include measurement signals, error signals or status signals. Auxiliary control signals are usually provided by the power inverter control unit as the power inverter control unit uses for example current values and voltage values measured for example at the common line side or machine side of all parallelized power inverters. Additionally, the power inverter control unit uses error signals and status signals of the power switches to control power switches of all power inverters. If the input signal unit is configured to receive those auxiliary control signals, for example error signals, the device can be used to adapt the switching operation further also with regard to received error signals or other auxiliary control signals of the power inverter control unit.

The switching operation of the power switches of at least one phase module in a power inverter is further improved by an embodiment of the device in that the device includes at least one measuring and signal processing unit to generate at least auxiliary control signals based on the measured AC output current of the power inverter. The switching operation of the phase modules of the power inverter do directly impact the AC output current of the power inverter, thus problematic load unbalances are therefore immediately identified by the measurement and signal processing unit and an accordant adaptation of the switching control signals is possible.

According to a further improved embodiment of the device the device is configured to dynamically adapt the switching control signal, for example based on at least received or generated auxiliary control signals. This allows in particular to dynamically adapt the delay of the switching control signal depending on for example measured AC current values of the phase module of a power inverter assembly stack. All control signals can therefore be adapted for example to changing operation conditions. For example if the temperature of the power switches is changed, the behavior of the power switches can be adapted also to for example changing environment constraints.

An embodiment of the device allows reducing the needed number of devices in that at least one input signal unit, the at least one adapting unit and the at least one output unit are configured to receive, adapt and provide control signals to all power switches of at least one power inverter assembly stack. With such a device the effort to adapt the switching operation of the power inverter assembly stack to different power inverter assembly stacks connected in parallel with each other will be reduced significantly.

According to a further teaching of the present invention the above mentioned object is solved by a power inverter assembly stack comprising at least one power inverter with at least one phase module including drive units for all power switches and at least one inventive device. As already pointed out, power inverter assembly stacks comprising the inventive device for adapting the switching operation of the power switches of at least one phase module in a power inverter allows to adapt the power switching operation of the power inverter and assembly stack and therefore allows replacement of power inverter assembly stacks without causing unbalanced loads between in parallel connected power inverter assembly stacks.

Preferably, the power inverter assembly stack additionally comprises at least a grid connection unit or machine connection unit and optionally a DC-link. The grid connection unit or a machine connection unit allows to connect the inventive power inverter assembly stack in parallel to further power inverter assembly stacks and thus allows an easy replacement of the power inverter assembly stack. The same applies if the power inverter assembly stack includes also the DC-link, which includes usually a capacitor bank.

According to another teaching of the present invention the above mentioned object is solved by a renewable power generating unit, in particular a wind turbine, with a plurality of power inverter assembly stacks connected in parallel with the power generator and/or with an electrical grid, comprising at least one power inverter assembly stack according to the present invention. The power inverter assembly stack allows adapting of the switching control signals of the power switches of at least one, preferably all phase modules in the power inverter assembly stack in the renewable power generating unit. If, for example, one power inverter assembly stack of the renewable power generating unit comprises the inventive device the switching operation of the power switches of this power inverter assembly stack can be adapted to the switching behavior to the power switches of the other remaining power inverter assembly stacks of the renewable power generating unit. In particular, if the at least one power inverter assembly stack is the power inverter assembly stack with a faster switching operation behavior, only one device for adapting the switching control signals is necessary. The use of at least one additional device allows the combination of at least three different in a parallel connected power inverter assembly stacks.

Due to the fact that wind turbines provide the power generation within levels of megawatts the inventive power generating unit can be further improved if the power generating unit is a wind turbine comprising a synchronous generator or a doubly fed induction machine as power generator. Both machine types of the wind turbines use in parallel connect power inverter assembly stacks, for example, arranged in switching cabinets, to provide power inverter for high-power production. Wind turbines therefore benefit from the inventive power inverter assembly stack by an easy replacement of power inverter assembly stacks with malfunctions without the danger of unbalanced loads after the replacement.

According to a further teaching of the present invention the above-mentioned object is solved by a method for operating the power switches of at least one phase module in a power inverter using the inventive device comprising the steps of
- receiving in at least one input signal unit at least one switching control signal of a power inverter control unit for the power switches of at least one phase module of a power inverter,
- adapting the received switching control signal of the power inverter control unit by delaying the switching control signal in at least one adapting unit and
- providing the adapted switching control signal of the power inverter control unit to the power switches of at least one phase module of the power inverter by at least one output unit.

As already pointed out above, with the inventive method the switching behavior of a power inverter can be adapted to different power inverter assembly stacks connected in parallel. In particular, the replacement of power inverters, for example, the replacement of power inverter assembly stacks are improved since unbalanced load states of the parallelized power inverter assembly stacks can be avoided easily.

According to an embodiment of the method in the at least one adapting unit the rising edge signal and the falling edge signal of the switching control signal of the power inverter control unit are delayed separately, in order to provide a more flexible adapting of the switching behavior of the power switches of one phase module.

A higher degree of control of the switching behavior of the power switches of at least one phase module in a power inverter can be achieved in that auxiliary control signals are received from the power inverter control unit by the at least one input signal unit and the switching control signal of the power switch is adapted by the at least one adapting unit additionally based on the auxiliary control signals. Auxiliary control signals may include measured data, i.e. measured currents, error signals or status signals for example of power switches, which may influence the power switch operation, for example, in the case of an error.

In order to minimize unbalanced load states of the different in parallel connected power inverter assembly stacks preferably the auxiliary control signals are generated by at least one measurement and signal processing unit of the inventive device configured to measure the AC output current of the power inverter.

An even more sophisticated adaptation of the switching behavior of for example replaced power inverter assembly stack can be achieved in that the switching control signals are dynamically delayed. Optionally the rising edge signal and the falling edge signal of the switching control signals are delayed separately, too. Contrary to fixed delay times, which may be empirically determined or measured under certain switching conditions, dynamically delayed switching control signals allow to consider also temporarily unbalanced current distributions to adapt the switching operation.

Therefore, according to a further improved embodiment of the method the dynamically delaying of the control signals is based on auxiliary control signals, like current measurements, error signals and state signals of the different switches for example.

The present invention is now described based on further embodiments in combination with the drawings. The drawings show in
- Fig. 1: in a schematic circuit diagram a first embodiment of a wind turbine comprising at least one inventive power inverter assembly stack,
- Fig. 2: the inventive device according to the first embodiment in Fig. 1,
- Fig. 3: in a schematic diagram a second embodiment of a replacement of power assembly stacks in a power circuit of a wind turbine, and
- Fig. 4: in a schematic diagram a third embodiment allowing a dynamical determination of the delay time of the rising edge signal and the falling edge signal of in a parallel connected power inverter assembly stacks.

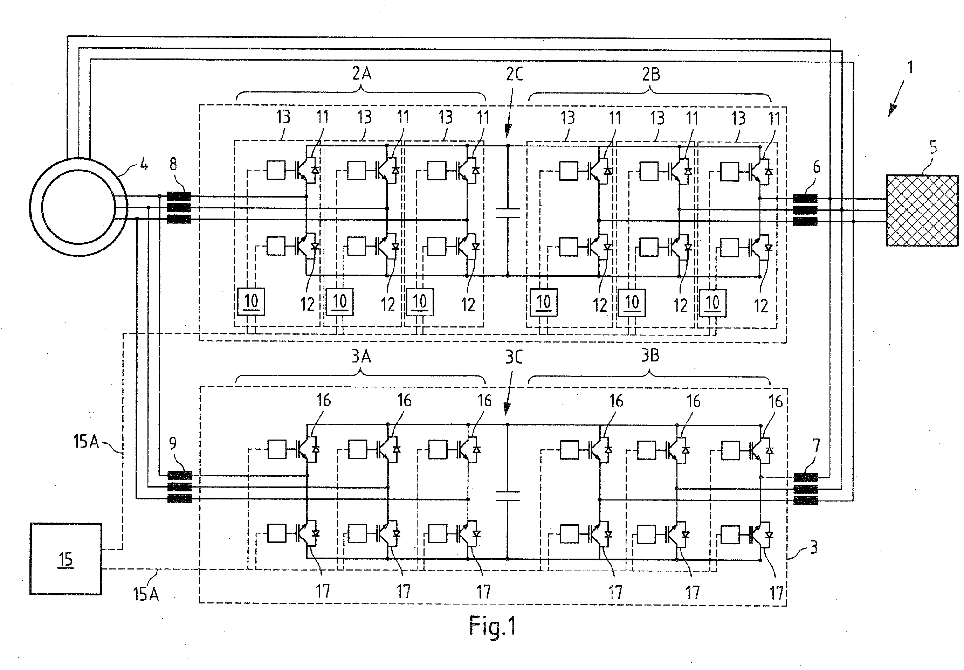

In Fig. 1 a schematic circuit diagram of a wind turbine 1 is shown. The wind turbine 1 comprises two power inverter assembly stacks 2 and 3, which each comprise two power inverters 2A, 2B, 3A and 3B. The power inverter assembly stack 2 is an inventive power inverter assembly stack comprising six inventive devices 10 to adapt switching operation of the power switches 11, 12 of the individual phase modules 13. In the present embodiment the power switches are realized by IGBT-modules each comprising a gate drive unit. Herein the gate drive unit and the IGBT module are named as power switch 11, 12, 16 and 17.

The power assembly stacks 2 and 3 are connected in parallel via the AC-phases of output units 6, 7, 8 and 9, which each comprises a choke. Via the choke the power assembly stacks 2 and 3 are connected in parallel on the machine side to a doubly fed induction generator 4 and on the line side to a grid 5. The power inverters 2A and 3A are connected in parallel as well as the power inverters 2B and 3B via their AC-phases. Additionally, the power inverter assembly stack 2 and 3 comprise DC-links 2C and 3C, which connects the two power inverter 2A, 2B respectively 3A and 3B. The wind turbine 1 of Fig. 1 therefore shows a typical arrangement of a power inverter assembly stacks 2 and 3 in parallel connected via the three AC phases. The AC phases are connected with the power switches 11, 12 via a half bridge configuration with the DC-Link 2C and in a top and bottom arrangement. Each phase module 13 of the inventive power inverter assembly stack 2 is connected to an inventive device 10 for adapting the switching operation of the power switches 11, 12 in a inventive power inverter 2A and 2B. In the embodiment shown in Fig. 1 one power inverter assembly stack has been replaced by an inventive power inverter assembly stack 2 which comprises the inventive device 10. The other power inverter assembly stack 3 does not comprise the inventive device 10 as the power inverter assembly stack 3 is the remaining power inverter assembly stack. The power inverter switch control 15 controls by providing switching control signals the switching operation of both power inverter assembly stacks 2 and 3. Usually, the power inverter control unit 15 is not replaced when replacing the power inverter assembly stack 2. Thus, the switching control signals 15A of the power inverter control unit 15 are adapted to the remaining power inverter assembly inverter stack 3. The replaced power inverter assembly stack 2 may comprise faster power switches 11, 12 of the power inverter 2A and 2B. Although, the power inverter 2A and 3A and the power inverter 2B and 3B are connected to each other via chokes the different switching behavior of the faster power switches 11, 12 lead to unbalanced current loads between power inverter assembly stack 2 and power inverter assembly stack 3. It is also possible that the replaced power inverter assembly stack 2 comprises slower power switches. In this case, at least one inventive device 10 must be connected to the power inverter assembly stack 3.

In order to avoid an unbalanced load of the in parallel connected phase module 13 of power inverter 2A and 3A of power inverter assembly stack 2 and 3 the inventive device 10 adapts the switching control signal of the power inverter control unit 15 by delaying the switching signal of power inverter assembly stack 2 to the slower power inverter assembly stack 3. As a result due to the same switching times of the in parallel connected power switches a balanced load can be achieved over both power inverter assembly stacks 2 and 3.

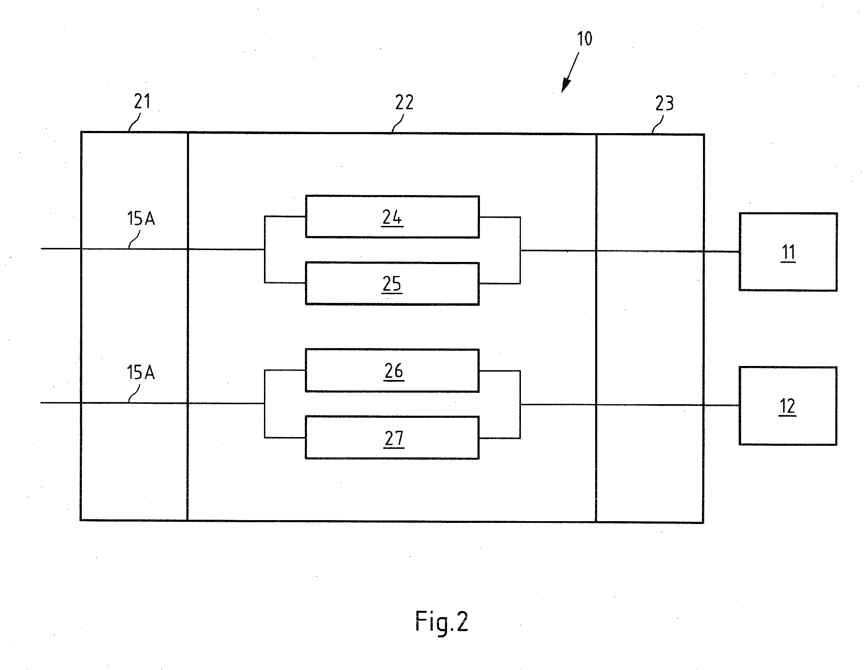

Fig. 2 shows now in a schematic circuit diagram the inventive device 10, comprising at least one input unit 21 configured to receive at least one switching control signal of the power inverter control unit 15 for the power switches 11, 12 of at least one phase module 13 of a power inverter 2A, 2B. In the adapting unit 22 the switching control signal 15A is adapted by delaying the signal with a time delay t1 and t2. The time delay t1 is assigned to the rising edge signal and the time delay t2 is assigned to the falling edge signal of the switching control signal of one power switch 11, 12 independently as shown in block 24 and 25. As can be depicted from Fig. 2 the at least one signal input unit 21 receives two control signals 15A from the power switch control unit 15, which are assigned to the two power switches 11, 12 in a top and bottom switch half bridge arrangement. The at least one output signal unit 23 is configured to provide the adapted control signal to the power switches 11, 12 of at least one phase module 13 of the power inverter 2A or 2B, for example, arranged in the top and bottom configuration of the 2-level power inverter topology.

With adapting at least one switching control signal of the power inverter control unit 15 by simply delaying the switching control signals the switching operation of the power switches 11 and 12 can be adapted to the in parallel connected slower power switches 16 and 17 of the remaining power inverter assembly stack 3. Thus, unbalanced load states of the in parallel connected power inverter assembly stacks 2 and 3 can be avoided.

Preferably the at least one adapting unit 22 as shown in figure 2 is configured to further adapt the switching control signal 15A of the power inverter control unit by, for example, changing the voltage level or the shape of the switching control signal 15A to be adapted for the different power switches 11 and 12 of the replacement power inverter assembly stack 2. Additionally, the input signal unit 21 of the inventive device is configured to receive auxiliary control signals of the power inverter control 15, wherein the auxiliary control signals may include measurement signals, for example signals depending on current measurements, error signals or status signals.

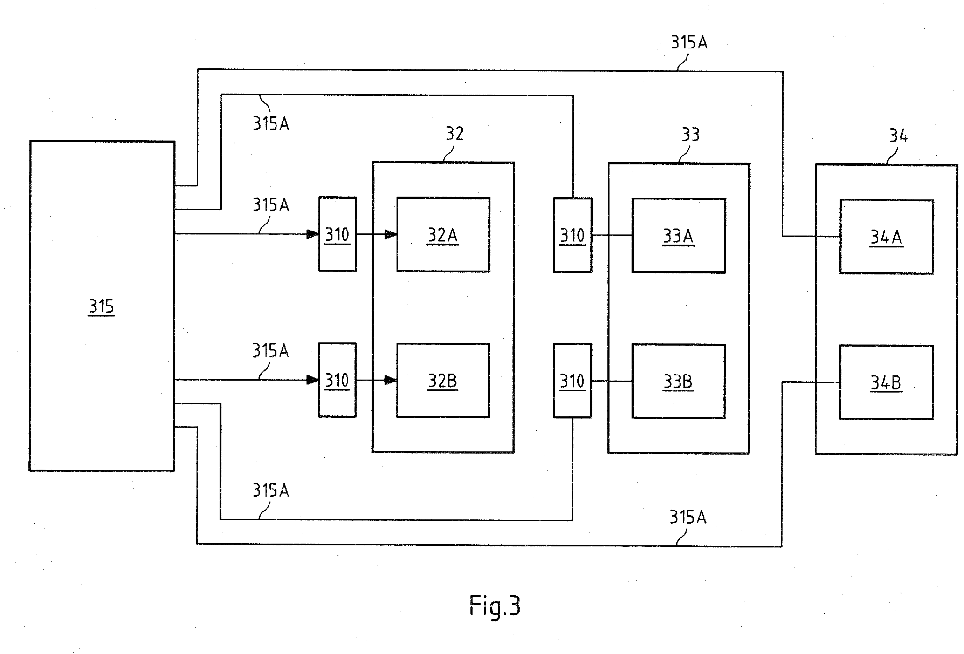

In Fig. 3 in a schematic diagram a second embodiment of parallel connected power inverter assembly stacks 32, 33 and 34 of a wind turbine are shown after the replacement of the power inverter assembly stacks 32 and 33. The power inverter assembly stacks 32, 33, 34 are connected in parallel at the machine side as well as at the grid side connection units with each other, which is not shown in Fig. 3. Power inverter assembly stack 32 and 33 have been replaced by new power inverter assembly stacks comprising a different, faster switching operation of the power switches in the power inverter 32A, 32B, 33A and 33B. The inventive device 310 allows to adapt the switching control signals 315A from the power inverter control unit 315 to the switching behavior of the not replaced power inverter assembly stack 34 comprising the power inverter 34A and 34B. In the embodiment shown in Fig. 3 the switching control unit 315 provides the power switching control signals 315A to all power inverter assemblies 32, 33 and 34. However, in other topologies like a master/slave topology for example the power inverter assembly stack 34 provides as master the switching control signals received from the power inverter control 315 to the other power inverter assembly stacks 32 and 33. Such a topology, however, is not shown in Fig. 3. One of the replaced power inverter assembly stacks 32 and 33, may work also as master. In this case the switching control signals have to be provided without any delay to the not replaced, "old" power inverter assembly stack 34. In case, however, the inverter 34 is the faster switching device, then an inventive device 310 should be only connected with inverter 34. Nevertheless, it is also possible to provide one inventive device 310 for each inverter 32, 33, 34 to have a maximum of flexibility in the case one of the power inverter assembly stacks needs to be replaced. Additionally, Fig. 3 shows that the inventive device 310 provides adapted switching control signals to all power switches of one power inverter 32A and 32B. It is also feasible to use only one device 310 for providing all switching control signals of the power inverter control unit 315 to all power switches of the power inverters of the power inverter assembly stack 32 if the inventive device adapts all switching control signals.

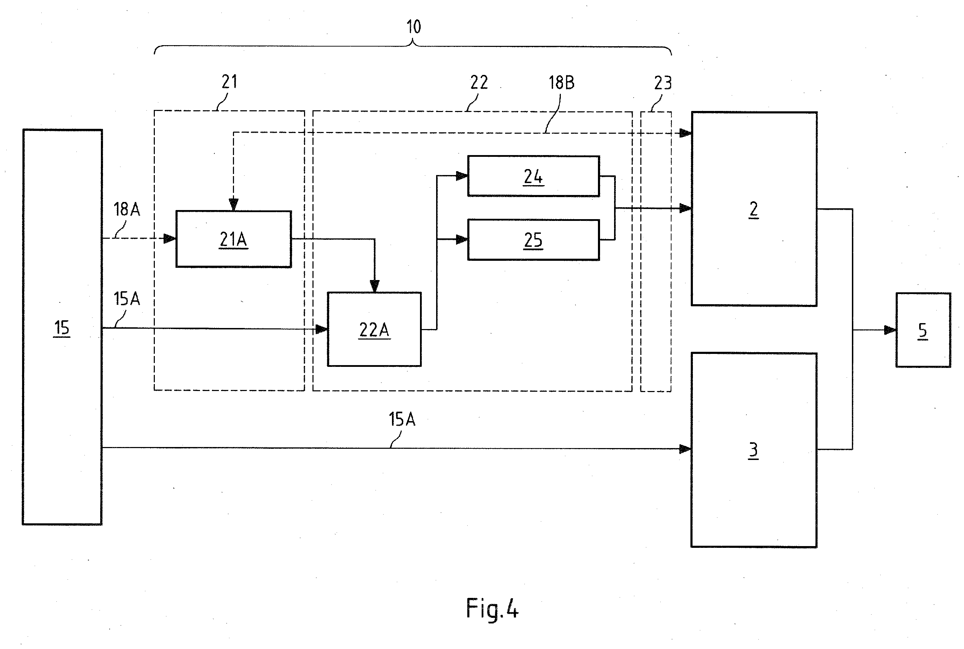

Fig. 4 shows in a further schematic diagram an embodiment of the inventive device 10 allowing a dynamical determination of the delay time t1 and t2 of the rising edge signal and the falling edge signal in parallel connected power inverter assembly stacks 2 and 3. Again the power inverter control unit 15 provides switching control signals 15A to the not replaced power inverter assembly stack 3 as well as to the inventive device 10 assigned to the other replaced power inverter assembly stack 2. In Fig. 4 only one device 10 is shown explanatory, which includes the dynamical calculation of the delay times t1 and t2 for the rising edge signal and the falling edge signal for one power switch 11 of the power inverter assembly stack 2. The inventive device 10 comprises an input signal unit 21, which is configured to receive also auxiliary control signals 18A, which can be provided either by the power switch control unit 15 or by measurement and signal processing unit not shown in Fig. 4 by measuring, for example AC currents at the AC output of the power inverter assembly stack 2, as indicated by signal 18B. The auxiliary control signals 18A/18B may include also auxiliary control signals based on measured currents of the power inverter assembly stack 3 and/or 2 via signals 18B. In a calculation unit 22A of the adapting unit 22 the auxiliary signals, for example AC current measurements are used to calculate the different delay times t1 and t2 for the rising edge and the falling edge signal of the switching control signal 15A depending from the measured current values. The output unit 23 of device 10 provides thus dynamically adapted switching control signal to the power inverter assembly stack 2 which includes separately delayed rising edge signals and falling edge signals to adapt the switching operation behavior of power switches in the power inverter assembly stack of at least one phase module with the in parallel connected phase modules of the not replaced power inverter assembly stack 3. With the dynamically delayed switching control signals the inventive device 10 allows to react even on transient or temporarily occurring unbalanced load states by delaying the switching operation of the in parallel connected power inverter assembly stack 2 dynamically. In particular the replacement of defect or degraded power inverter assembly stacks is thus made significantly easier.

## Claims

1. Device (10) for adapting the switching operation of power switches (11, 12, 16, 17) of at least one phase module (13) in a power inverter (2A, 2B, 3A, 3B), wherein the device (10) comprises:
- at least one input signal unit (21) configured to receive at least one switching control signal (15A) of an inverter control unit (15) for the power switches (11, 12, 16, 17) of at least one phase module (13) of a power inverter (2A, 2B, 3A, 3B),
- at least one adapting unit (22) configured to adapt the received switching control signal (15A) of the inverter control unit (15) by delaying the switching control signal (15A),
- at least one output signal unit (23) configured to provide the adapted control signal of the inverter control unit (15) to the power switches (11, 12, 16, 17) of at least one phase module (13) of the power inverter(2A, 2B, 3A, 3B).

2. Device (10) according to claim 1, wherein
the at least one adapting unit (22) is configured to further adapt the switching control signal (15A) of the power inverter control unit (15).

3. Device according to claim 1 or 2, wherein
the adapting unit (22) is configured to delay the switching control signal (15A) of the inverter control unit (15) for the power switches (11, 12, 16, 17) of all phase modules of at least one power inverter connected to the grid connection unit and/or of at least one power inverter connected to the machine connection unit with the same delay time.

4. Device according to one of claim 1 to 3, wherein
the at least one adapting unit (22) is configured to delay the rising edge and the falling edge of the switching control signal (15A) of the inverter control unit (15) separately, in particular the rising edge and the falling edge signal of each of a top (11, 16) and a bottom power switch (12, 17) of a phase module (13) separately.

5. Device according to one of claims 1 to 4, wherein
the input signal unit (21) is configured to receive auxiliary control signals (18A), wherein auxiliary control signals may include measurement signals, error signals or status signals.

6. Device according to one of claims 1 to 5, wherein
the device (10) includes at least one measuring and signal processing unit to generate at least auxiliary control signals based on measuring the AC output current of the power inverter (2A, 2B, 3A, 3B).

7. Device according to one of claims 1 to 6, wherein
the device (10) is configured to dynamically adapt the switching control signal (15A).

8. Device according to one of claims 1 to 7, wherein
the at least one input signal unit (21), the at least one adapting unit (22) and the at least one output unit (23) are configured to receive, adapt and provide switching control signals (15A) to all power switches of at least one power inverter assembly stack (2, 3).

9. Power inverter assembly stack (2, 3) comprising at least one power inverter (2A, 2B, 3A, 3B) with at least one phase module (13) including drive units for all power switches (11) and a device (10) according to claim 1 to 8.

10. Power inverter assembly stack according to claim 9, wherein the power inverter assembly (2) additionally comprises at least
- one grid connection unit (6, 7) and/or one machine connection unit (8, 9) and
- optionally one DC-link (2C, 3C).

11. Renewable power generating unit, in particular a wind turbine, with a plurality of power inverter assembly stacks (2, 3) connected in parallel with a power generator (4) and/or with an electrical grid (5), comprising at least one power inverter assembly stack (2) according to 8 or 9.

12. Power generating unit according to claim 11, wherein the power generating unit is a wind turbine comprising a synchronous generator or a doubly fed induction machine as power generator (4).

13. Method for operating the power switches (11, 12, 16, 17) of at least one phase module (13) in a power inverter (2A, 2B) using a device according to claim 1 to 8 comprising the steps of
- receiving in at least one input signal unit (21) at least one switching control signal (15A) of a power inverter control unit (15) for the power switches (11,12) of at least one phase module (13) of a power inverter (2A, 2B),
- adapting the received switching control signal (15A) of the inverter control unit (15) by delaying the switching control signal (15A) by at least one adapting unit (22),
- providing the adapted switching control signal of the power inverter control unit (15) to the power switches (11,12) of at least one phase module (13) of the power inverter by at least one output unit (23).

14. Method according to claim 13, wherein
in the at least one adapting unit (22) the rising edge and the falling edge signal of the switching control signal (15A) of the inverter control unit (15) are delayed separately.

15. Method according to claim 13 or 14, wherein
auxiliary control signals (18A) are received from the power inverter control unit (15) by the at least one input signal unit (21) and the switching control signal (15) of the power switches (11, 12) is adapted by the at least one adapting unit (22) additionally based on the auxiliary control signals (18A).

16. Method according to one of claims 13 to 15, wherein
the auxiliary control signals (18A) are generated by at least one measurement and signal processing unit configured to measure at least the AC output current of the power inverter (2A, 2B).

17. Method according to one of claims 13 to 16, wherein
the switching control signals (15) are dynamically delayed, wherein optionally the rising edge and falling edge of the switching control signals (15A) are delayed separately.

18. Method according to claim 17, wherein
dynamically delaying the control signals is based on auxiliary control signals (18A/18B).
